**Europäisches Patentamt**

**European Patent Office**

**Office européen des brevets**

(19)

(11) Publication number : **0 639 592 A1**

## (12) EUROPEAN PATENT APPLICATION

(21) Application number : **94305849.5**

(22) Date of filing : **05.08.94**

(51) Int. Cl.$^6$ : **C08F 283/06,** C11D 3/37

(30) Priority : **18.08.93 JP 203866/93**
**18.08.93 JP 203867/93**

(43) Date of publication of application :
**22.02.95 Bulletin 95/08**

(84) Designated Contracting States :
**DE FR GB**

(71) Applicant : **NIPPON SHOKUBAI CO., LTD.**
**1-1, Koraibashi, 4-chome**
**Chuo-ku, Osaka-shi, Osaka-fu 541 (JP)**

(72) Inventor : **Tagaki, Masahito**
**5-1-304 Nishimachi**
**Takatsuki-shi, Osaka 569 (JP)**
Inventor : **Saeki, Takuya**
**Haitsu Esaka 402,**
**1-12-12 Esaka-cho**
**Suita-shi, Osaka 564 (JP)**
Inventor : **Nishibayashi, Hideyuki**
**1-7-9-301 Takasu-cho**
**Nishinomya-shi, Hyogo-ken 663 (JP)**

(74) Representative : **Ouzman, Beverley Nicola**
**Claire et al**
**Murgitroyd and Company,**
**373 Scotland Street**
**Glasgow G5 8QA (GB)**

(54) **Water-soluble graft polymers and production process thereof.**

(57)  A process for producing a water-soluble graft polymer, which includes the steps of : (1) preparing (A) a polyether compound including 80 mol % or more of ethylene oxide as a constituent unit and having a number-average molecular weight of 200 or more and (B) a monomer component including (b1) 40 to 100 mol % of (meth)acrylic acid and (b2) 0 to 60 mol % of another copolymerizable monoethylenically unsaturated monomer ; and then (2) carrying out graft polymerization of the monomer component (B) upon the polyether compound (A) by mixing the monomer component (B) with the polyether compound (A) at 100 °C or higher in the presence of a polymerization initiator using substantially no solvent. In this reaction, the amount grafted of the monomer component (B) is approximately 25 wt. % per 100 wt. % of the polyether compound (A) or larger.

EP 0 639 592 A1

## BACKGROUND OF THE INVENTION

The present invention relates to graft polymers in which monoethylenically unsaturated monomers including a major proportion of (meth)acrylic acid are grafted on polyethers including a major proportion of ethylene oxide, and also the invention relates to a production process of the graft polymers.

Graft polymerization of (meth)acrylic acid upon polyether compounds has so far been attempted in various fields of utilization such as polyurethane. For example, Japanese Official Patent Provisional Publication No. Showa 55-71710 discloses graft polymers and their production process wherein graft polymerization of 3 to 15 wt. % (based on the total charged amount) of acrylic acid upon polyoxyalkylene compounds is carried out. However, in this case, when the graft polymers obtained are used as builders, they do not display satisfactory performance, or a very large amount of these polymers need to be added for displaying their performance, because the content of carboxylic acids in these polymers is too low.

In addition, Japanese Official Patent Provisional Publication No. Showa 59-62614 discloses graft polymers and their production process wherein graft polymerization of at least 20 wt. % (based on the graft polymers) of ethylenically unsaturated hydrophilic monomers upon polyglycol ethers having at least one hydrophobic group is carried out. However, in this process, a solvent such as water and toluene is used, or even if no solvent is used, the reaction temperature is 90°C or lower. Therefore, the graft efficiency of polymers obtained is low and a large amount of polymers having no grafted part are formed. In the case where such graft polymers are used as builders or dispersants for inorganic pigments and the like, satisfactory performance is not displayed. In addition, in the case where these graft polymers are used as builders for liquid detergents, there occurs a problem that the polymers separate.

In addition, Japanese Official Patent Provisional Publication No. Heisei 3-177406 also discloses the same graft polymers as mentioned above, which are obtained by carrying out polymerization in a water solvent. However, in this polymerization process, the graft efficiency is low and most of the polymers obtained are polycarboxylic acids having no grafted part. Therefore, in the case of using these polymers as builders, there are the same problems as the above-mentioned prior arts.

As seen above, in the prior arts, graft polymers cannot be produced which have a high carboxylic acid density and a high graft efficiency and also contain only a small amount of polymers having no grafted part. In addition, even if graft polymers obtained by the prior arts are used as builders, sufficient effects are not obtained.

## SUMMARY OF THE INVENTION

It is an object of the present invention to provide a water-soluble graft polymer having a high graft ratio in which a monoethylenically unsaturated monomer including a major proportion of (meth)acrylic acid is grafted on a polyether in a high content.

It is another object of the present invention to provide a process for producing such a water-soluble graft polymer.

It is another object of the present invention to provide a builder which includes the water-soluble graft polymer of the present invention, which can be combined with a detergent composition to improve its washing-power, which displays good dispersibility, and which can also be combined with a liquid detergent.

In addition, it is another object of the present invention to provide a detergent composition containing the builder of the present invention.

The process of the present invention for producing a water-soluble graft polymer includes the steps of:

preparing:

(A) a polyether compound including 80 mol % or more of ethylene oxide as a constituent unit and having a number-average molecular weight of 200 or more; and

(B) a monomer component including:

(b1) 40 to 100 mol % of (meth)acrylic acid; and

(b2) 0 to 60 mol % of another copolymerizable monoethylenically unsaturated monomer;

and then

carrying out graft polymerization of the monomer component (B) upon the polyether compound (A) by mixing the monomer component (B) with the polyether compound (A) at 100 °C or higher in the presence of a polymerization initiator using substantially no solvent. In this graft polymerization step, the amount used of the monomer component (B) is 25 wt. % per 100 wt. % of the polyether compound (A) or larger. In addition, this amount is preferably within the range of 25 to 200 wt. % per 100 wt. % of the polyether compound (A).

These and other objects and advantages of the present invention will be more fully apparent from the following detailed description.

DETAILED DESCRIPTION OF THE INVENTION

The polyether compound (A) used in the present invention includes 80 mol % or more of ethylene oxide as a constituent unit and has a number-average molecular weight of 200 or more, and this compound (A) is, for example, obtained by polymerizing ethylene oxide and other alkylene oxides by conventional methods using water or alcohol as an initiator. The alcohols used for obtaining the polyether are, for example, primary alcohols with 1 to 22 carbon atoms such as methanol, ethanol, n-propanol and n-butanol; secondary alcohols with 3 to 18 carbon atoms; tertiary alcohols such as tert-butanol; diols such as ethylene glycol, diethylene glycol, propanediol, butanediol and propylene glycol; triols such as glycerol and trimethylolpropane; polyols such as sorbitol. The other alkylene oxides copolymerizable with ethylene oxide are not especially limited. However, propylene oxide and butylene oxide are preferable. In addition, the content of the other alkylene oxides in the polyether compound (A) needs to be less than 20 mol %. If this content is 20 mol % or more, the graft ratio of a polymer obtained is lowered. In addition, the polyether compound (A) may be such as produced by esterifying a hydroxyl group of all or part of the terminals of the above-obtained polyether with fatty acids having 2 to 22 carbon atoms or with dicarboxylic acids such as succinic acid, succinic anhydride and adipic acid.

In addition, the number-average molecular weight of these polyethers is 200 or higher, preferably 500 or higher, more preferably 1,000 or higher. There is not especially an upper limit of the molecular weight. However, a preferable upper limit is 20,000 or lower. In the case where the polyether has two or more hydroxyl groups, the upper limit is preferably 6,000 or lower. If the molecular weight of the polyethers is lower than 200, the amount of ungrafted polyethers increases. In such a case, if polymers obtained are used as builders, there occur problems such that the demanded amount of builders increases and therefore satisfactory performance is not obtained.

In the present invention, it is necessary to subject the above-mentioned polyether compound (A) to graft polymerization with a monomer component (B) including: (b1) 40 to 100 mol % of (meth)acrylic acid and (b2) 0 to 60 mol % of another copolymerizable monoethylenically unsaturated monomer. In this graft polymerization, it is necessary that the monomer component (B) is grafted in a ratio of 25 wt. % per 100 wt. % of the polyether compound (A) or more. In addition, it is more preferable that acrylic acid as the component (b1) of the monomer component (B) is grafted in a ratio of 20 wt. % per 100 wt. % of the polyether compound (A) or more. The ratio of the grafted monomer component (B) is less than 25 wt. %, the carboxylic acid density of graft polymers obtained is lowered and, because of this, there is not obtained satisfactory performance with regard to dispersibility and polyvalent metal ion-chelatability.

The other monoethylenically unsaturated monomers (b2) copolymerizable with (meth)acrylic acid (b1) are, for example, maleic acid; fumaric acid; maleic anhydride; alkylesters of maleic acid such as dimethyl maleate and diethyl maleate; alkylesters of fumaric acid such as dimethyl fumarate and diethyl fumarate; alkyl (meth)acrylates such as methyl (meth)acrylate, ethyl (meth)acrylate, butyl (meth)acrylate and stearyl (meth)acrylate; hydroxyalkyl (meth)acrylates such as hydroxyethyl (meth)acrylate and hydroxypropyl (meth)acrylate; alkenyl esters of acetic acid such as vinyl acetate; aromatic vinyl such as styrene; (meth)acrylonitrile, (meth)acrolein, (meth)acrylamide; dialkylaminoethyl (meth)acrylates such as dimethylaminoethyl (meth)acrylate; 2-acrylamido-2-methylpropanesulfonic acid. Of these compounds, one kind alone or two or more kinds may be used. In addition, among these compounds, preferred are maleic acid, fumaric acid and maleic anhydride from viewpoints of enhancing a carboxylic acid density of graft polymers to improve their dispersibility and polyvalent metal ion-chelatability.

In the case of using at least one selected from the group consisting of maleic acid, fumaric acid and maleic anhydride as the other monoethylenically unsaturated monomer (b2) copolymerizable with (meth)acrylic acid (b1), it is especially preferable to beforehand mix half or more of the amount used of the monomer (b2) with the polyether compound (A) and then add a polymerization initiator and the balance of the monomer component (B) to carry out the graft polymerization. This method greatly improves the ratio at which maleic acid, fumaric acid and maleic anhydride are introduced into a graft polymer.

As to a copolymerization ratio between (meth)acrylic acid (b1) and the other monoethylenically unsaturated monomer (b2) copolymerizable therewith, the (b1) is within the range of 40 to 100 mol % and the (b2) is within the range of 0 to 60 mol %. In the case where the monomer (b2) has no carboxyl group, a preferable copolymerization ratio is as follows: 80 to 100 mol % for the (b1) and 0 to 20 mol % for the monomer (b2). In the case where the monomer (b2) has no carboxyl group, the copolymerization ratio of (meth)acrylic acid is less than 80 mol %, the carboxylic acid density of graft polymers obtained is low and, because of this, there is not obtained satisfactory builder performance such as dispersibility and polyvalent metal ion-chelatability. In the case where the monomer (b2) is a carboxyl group-containing monomer such as maleic acid, fumaric acid and maleic anhydride, even if the copolymerization ratio of (meth)acrylic acid is less than 40 mol %, the carboxylic acid density of graft polymers obtained may not be lowered, but there are problems such as a decreased ratio at which maleic acid, fumaric acid and maleic anhydride are introduced into a graft polymer and increase in the amount of residual monomers.

The graft polymerization is carried out in the presence of a polymerization initiator using substantially no solvent.

As the polymerization initiator, there can be used conventional radical initiators. However, organic peroxides are especially preferable.

The organic peroxides are, for example, ketone peroxides such as methyl ethyl ketone peroxide and cyclohexanone peroxide; hydroperoxides such as tert-butyl hydroperoxide, cumene hydroperoxide, diisopropylbenzene hydroperoxide, p-menthane hydroperoxide, 2,5-dimethylhexane-2,5-dihydroperoxide and 1,1,3,3-tetramethylbutyl hydroperoxide; dialkyl peroxides such as di-tert-butyl peroxide, tert-butylcumyl peroxide, dicumyl peroxide, α, α'-bis(tert-butylperoxy)-p-diisopropylbenzene and α, α'-bis(tert-butylperoxy)-p-diisopropylhexyne; peroxy esters such as tert-butylperoxy acetate, tert-butylperoxy laurate, tert-butylperoxy benzoate, di-tert-butylperoxy isophthalate, 2,5-dimethyl-2,5-di(benzoylperoxy)hexane and tert-butylperoxyisopropyl carbonate; peroxyketals such as n-butyl-4,4-bis(tert-butylperoxy) valeate and 2,2-bis(tert-butylperoxy)butane; diacyl peroxides such as dibenzoyl peroxide.

The amount of the polymerization initiator is not especially limited. However, the polymerization initiator is preferably used in an amount of 0.1 to 15 wt. %, more preferably 0.5 to 10 wt. %, based on the monoethylenically unsaturated monomers. If the amount used of the initiator is more or less than this range, an efficiency of the monomers grafted upon the polyether is lowered. In addition, the polymerization initiator may be added to the polyether either beforehand separately from or together with the monoethylenically unsaturated monomers.

The graft polymerization is carried out using substantially no solvent. If water or an organic solvent such as alcohol and toluene is used, the efficiency of the monomers grafted upon the polyether is lowered. In the case where a solvent is used for adding the initiator and the monomers, it is preferable that the amount used of this solvent is as small as possible, more preferably 5 wt. % or smaller based on the amount used of all materials, or that the solvent is removed from a reaction system by evaporation immediately after its adding.

The polymerization temperature is 100 °C or higher, preferably within the range of 110 to 160 °C . If this temperature is lower than 100°C , the efficiency of the monomers grafted upon the polyether is lowered. In addition, at a temperature higher than 160°C, there may occur thermal decomposition of the polyethers and graft polymers.

When the graft polymerization is carried out, it is preferable that part of or the whole of the amount used of the polyether compound (A) is initially charged.

In addition, in the case where maleic acid, fumaric acid or maleic anhydride is used as the monomer (b2), it is preferable that half or more of the amount used of the monomer (b2) is initially charged together with the polyether compound (A). The initiator and a balance of the monomers are separately added dropwise after heating the polyether up to 100 °C or higher. On this occasion, if part of the amount used of the polyether compound (A) is initially charged, a balance of the polyether compound (A) may be mixed with the initiator or monomers and added dropwise.

According to the production process of the present invention, in the graft polymerization reaction, the content of polymers of only ungrafted monomer components (B) can be lowered and a water-soluble graft polymer having high purity can be obtained which has not yet been achieved by known arts.

More particularly, a water-soluble graft polymer can be obtained in which the content of polymers of only monomer components (B) ungrafted upon the polyether (A) is smaller than 30 wt. %, more preferably smaller than 25 wt. %, per 100 wt. % of all the monomer components (B) used.

The graft polymer obtained can be used as a dispersant, a scale-inhibiting agent or a detergent builder either by dissolving intactly this polymer in a solvent such as water and alcohol, or by adding a base to this polymer to convert it into its salt. Examples of such a salt are monovalent metal salts such as sodium salts and potassium salts; divalent metal salts such as calcium salts; trivalent metal salts such as aluminum salts; organic amine salts such as ammonium salts, monoethanolamine and triethanolamine. On this occasion, water is preferred as a solvent.

The water-soluble graft polymer obtainable by the production process of the present invention displays good performance as dispersants for inorganic or organic substances which are sparingly soluble in water. For example, this polymer displays good performance as dispersants for: heavy or light calcium carbonate used for paper coating; inorganic pigments such as clay; and water slurries of cement, coal and the like. Besides, this polymer can be used as water-treating agents for inhibiting formation of scale in systems such as cooling water systems, boiler water systems, desalination plants, pulp digestors and black liquor evaporators, and also as fiber-treating agents such as dyeing promoters and electrification-preventing promoters for fibers.

The water-soluble graft polymer obtainable by the production process of the present invention can be used as a water-absorbent resin by crosslinking this polymer using a crosslinking agent. The soluble content of this water-absorbent resin is low, because the above-mentioned graft polymer has a high graft ratio. In addition, the above-mentioned water-absorbent resin has high salt-resistance, because it contains the polyether in its principal chain. The crosslinking is carried out by conventional methods and not especially limited. However, the crosslinking is preferably carried out by a reaction between the crosslinking agent and a carboxyl group of the graft polymer.

A detergent composition of the present invention contains a surfactant and a builder including the water-soluble graft polymer of the present invention and may be used in any form of powder, solid and liquid. Particularly, the water-soluble graft polymer of the present invention displays good solubility into liquid detergents to which conventional high-molecular builder polyacrylic acid salts or acrylic acid/maleic acid copolymers cannot be added because of their poor compatibility with the liquid detergents. Thus, the graft polymer of the present invention is preferable as a builder for liquid detergents.

As the surfactant, there may be used at least one selected from the group consisting of anionic, nonionic, ampholytic, and cationic surfactants. The surfactant and the builder are, for example, used in a ratio of 0.5 to 200 parts by weight of the builder per 100 parts by weight of the surfactant. However, the ratio between them is not limited to this range. If the amount of the builder is larger than the above range, there are economical disadvantages. If the amount of the builder is smaller than the above range, there cannot practically be expected merits which are obtained by adding the builder.

The builder of the present invention may be used in combinations with conventional builders such as zeorite, citric acid salts, polyacrylic acid salts, acrylic acid/maleic acid copolymer salts, condensed phosphoric acid salts and silicic acid salts. In this case, the ratio used of the builder of the present invention may properly be determined and is not especially limited.

Furthermore, into the detergent composition of the present invention there may be added other components, as usually used for conventional detergent compositions, such as alkalis, inorganic electrolytes, chelating agents, re-pollution preventing agents, enzymes, bleachers, fluorescent agents, antioxidizing agents, solubilizers, coloring agents and perfumes.

DESCRIPTION OF THE PREFERRED EMBODIMENTS

Hereinafter, this invention is illustrated by the following examples of some preferred embodiments in comparison with comparative examples not according to the invention. However, this invention is not limited to the undermentioned examples. Furthermore, in the examples and comparative examples, unless otherwise noted, the unit "part(s)" denotes "part(s) by weight".

EXAMPLE 1

Into a glass-made reaction vessel equipped with a thermometer, stirrer, nitrogen gas-introducing tube and reflux condenser was placed 100 parts of polyethylene glycol having a number-average molecular weight of 3,000. Under a nitrogen gas current, this polyethylene glycol was melted by heating and the inside temperature of the reaction vessel was raised to 145°C while stirring. Next, while maintaining the inside temperature within the range of 145 to 147°C, 50 parts of acrylic acid and 2.5 parts of di-tert-butyl peroxide were separately added dropwise continuously in a 1-hour period and then stirred continuously for 20 minutes. After cooling, a 10 % aqueous sodium hydroxide solution was added in such an amount that acrylic acid, added dropwise, was completely neutralized, and then the solution was heated while stirring at reflux temperature for 1 hour to obtain an aqueous solution of a sodium salt of a graft polymer 1.

EXAMPLE 2

Into the same reaction vessel as used in EXAMPLE 1 was placed 100 parts of monomethoxypolyethylene glycol having a number-average molecular weight of 2,000. Under a nitrogen gas current, this monomethoxypolyethylene glycol was melted by heating and the inside temperature of the reaction vessel was raised to 130°C while stirring. Next, while maintaining the inside temperature within the range of 130 to 132°C , 66.8 parts of acrylic acid and 5 parts of di-tert-butyl peroxide were separately added dropwise continuously in a 1-hour period and then stirred continuously for 80 minutes. After cooling, a 10 % aqueous sodium hydroxide solution was added in such an amount that acrylic acid, added dropwise, was completely neutralized, and then the solution was heated while stirring at reflux temperature for 1 hour to obtain an aqueous solution of a sodium salt of a graft polymer 2.

EXAMPLE 3

Into the same reaction vessel as used in EXAMPLE 1 was placed 70 parts of polyethylene glycol having a number-average molecular weight of 2,000. Under a nitrogen gas current, this polyethylene glycol was melted by heating and the inside temperature of the reaction vessel was raised to 145 °C while stirring. Next, while maintaining the inside temperature within the range of 146 to 147°C , 30 parts of acrylic acid and 0.3 parts of di-tert-butyl peroxide were separately added dropwise continuously in a 1-hour period and then stirred continuously for 1 hour. After cooling, a 10 % aqueous sodium hydroxide solution was added in such an amount that acrylic acid, added dropwise, was completely neutralized, and then the solution was heated while stirring at reflux temperature for 1 hour to obtain an aqueous solution of a sodium salt of a graft polymer 3.

EXAMPLE 4

Into the same reaction vessel as used in EXAMPLE 1 was placed 70 parts of polyethylene glycol having a number-average molecular weight of 3,000. Under a nitrogen gas current, this polyethylene glycol was melted by heating and the inside temperature of the reaction vessel was raised to 150 °C while stirring. Next, while maintaining the inside temperature within the range of 150 to 152°C, 30 parts of methacrylic acid and 1.5 parts of di-tert-butyl peroxide were separately added dropwise continuously in a 1-hour period and then stirred continuously for 30 minutes. After cooling, a 10 % aqueous sodium hydroxide solution was added in such an amount that methacrylic acid, added dropwise, was completely neutralized, and then the solution was heated while stirring at reflux temperature for 1 hour to obtain an aqueous solution of a sodium salt of a graft polymer 4.

EXAMPLE 5

Into the same reaction vessel as used in EXAMPLE 1 were placed 70 parts of monomethoxypolyethylene glycol having a number-average molecular weight of 2,000 and 13.9 parts of maleic acid. Under a nitrogen gas current, these materials were melted by heating to make a mixture and the inside temperature of the reaction vessel was raised to 145 °C while stirring. Next, while maintaining the inside temperature within the range of 145 to 147°C , 19 parts of acrylic acid and 1.7 parts of di-tert-butyl peroxide were separately added dropwise continuously in a 1-hour period and then stirred continuously for 1 hour. After cooling, a 10 % aqueous sodium hydroxide solution was added, while stirring, in such an amount that the pH rose to about 11, and then the solution was heated while stirring at reflux temperature for 1 hour to obtain an aqueous solution of a sodium salt of a graft polymer 5.

EXAMPLE 6

Into the same reaction vessel as used in EXAMPLE 1 were placed 40 parts of monomethoxypolyethylene glycol having a number-average molecular weight of 2,000 and 20.9 parts of maleic acid. Under a nitrogen gas current, these materials were melted by heating to make a mixture and the inside temperature of the reaction vessel was raised to 145 °C while stirring. Next, while maintaining the inside temperature within the range of 145 to 146°C , 1.3 parts of di-tert-butyl peroxide and a solution prepared by dissolving 30 parts of the same monomethoxypolyethylene glycol as mentioned above in 12.9 parts of acrylic acid were separately added dropwise continuously in a 1-hour period and then stirred continuously for 1 hour. After cooling, a 10 % aqueous sodium hydroxide solution was added, while stirring, in such an amount that the pH rose to about 11, and then the solution was heated while stirring at reflux temperature for 1 hour to obtain an aqueous solution of a sodium salt of a graft polymer 6.

EXAMPLE 7

Into the same reaction vessel as used in EXAMPLE 1 were placed 70 parts of monomethoxypolyethylene glycol having a number-average molecular weight of 2,000 and 13.9 parts of fumaric acid. Under a nitrogen gas current, these materials were melted by heating to make a mixture and the inside temperature of the reaction vessel was raised to 145°C while stirring. Next, while maintaining the inside temperature within the range of 145 to 146°C, 19 parts of acrylic acid and 1.7 parts of di-tert-butyl peroxide were separately added dropwise continuously in a 1-hour period and then stirred continuously for 1 hour. After cooling, a 10 % aqueous sodium hydroxide solution was added, while stirring, in such an amount that the pH rose to about 11, and then the solution was heated while stirring at reflux temperature for 1 hour to obtain an aqueous solution of a sodium salt of a graft polymer 7.

EXAMPLE 8

Into the same reaction vessel as used in EXAMPLE 1 was placed 70 parts of monomethoxypolyethylene glycol having a number-average molecular weight of 2,000. Under a nitrogen gas current, this monomethoxypolyethylene glycol was melted by heating and the inside temperature of the reaction vessel was raised to 150 °C while stirring. Next, while maintaining the inside temperature within the range of 150 to 153°C , 29.4 parts of acrylic acid and 1.5 parts of di-tert-butyl peroxide were separately added dropwise continuously in a 1-hour period and then stirred continuously for 30 minutes. After cooling, a 10 % aqueous sodium hydroxide solution was added in such an amount that acrylic acid, added dropwise, was completely neutralized, and then the solution was heated while stirring at reflux temperature for 1 hour to obtain an aqueous solution of a sodium salt of a graft polymer 8.

EXAMPLE 9

Into the same reaction vessel as used in EXAMPLE 1 was placed 70 parts of polyethylene glycol having a number-average molecular weight of 2,000. Under a nitrogen gas current, this polyethylene glycol was melted by heating and the inside temperature of the reaction vessel was raised to 150 °C while stirring. Next, while maintaining the inside temperature within the range of 150 to 153°C, 1.5 parts of di-tert-butyl peroxide and a solution prepared by mixing 23.9 parts of acrylic acid and 6.1 parts of n-butyl acrylate were separately added dropwise continuously in a 1-hour period and then stirred continuously for 30 minutes. After cooling, a 10 % aqueous sodium hydroxide solution was added in such an amount that 90 % of acrylic acid was neutralized, and then the solution was stirred at room temperature to obtain an aqueous solution of a sodium salt of a graft polymer 9.

EXAMPLE 10

Into the same reaction vessel as used in EXAMPLE 1 was placed 70 parts of polyethylene glycol having a number-average molecular weight of 200. Under a nitrogen gas current, the inside temperature of the reaction vessel was raised to 150°C while stirring. Next, while maintaining the inside temperature within the range of 150 to 151°C , 27.4 parts of acrylic acid and 3 parts of di-tert-butyl peroxide were separately added dropwise continuously in a 1-hour period and then stirred continuously for 30 minutes. After cooling, a 10 % aqueous sodium hydroxide solution was added in such an amount that acrylic acid, added dropwise, was completely neutralized, and then the solution was heated while stirring at reflux temperature for 1 hour to obtain an aqueous solution of a sodium salt of a graft polymer 10.

EXAMPLE 11

Into the same reaction vessel as used in EXAMPLE 1 were placed 70 parts of monomethoxypolyethylene glycol having a number-average molecular weight of 5,000 and 16.2 parts of maleic acid. Under a nitrogen gas current, these materials were melted by heating to make a mixture and the inside temperature of the reaction vessel was raised to 150 °C while stirring. Next, while maintaining the inside temperature within the range of 150 to 151°C , 21.4 parts of acrylic acid and 2.48 parts of di-tert-butyl peroxide were separately added dropwise continuously in a 1-hour period and then stirred continuously for 30 minutes. After cooling, a 10 % aqueous sodium hydroxide solution was added, while stirring, in such an amount that the pH rose to about 11, and then the solution was heated while stirring at reflux temperature for 1 hour to obtain an aqueous solution of a sodium salt of a graft polymer 11.

EXAMPLE 12

Into the same reaction vessel as used in EXAMPLE 1 were placed 70 parts of monomethoxypolyethylene glycol having a number-average molecular weight of 2,000 and 11.8 parts of maleic anhydride. Under a nitrogen gas current, these materials were melted by heating to make a mixture and the inside temperature of the reaction vessel was raised to 150°C while stirring. Next, while maintaining the inside temperature within the range of 150 to 151°C , 20.4 parts of acrylic acid and 1.6 parts of di-tert-butyl peroxide were separately added dropwise continuously in a 1-hour period and then stirred continuously for 30 minutes. After cooling, a 10 % aqueous sodium hydroxide solution was added, while stirring, in such an amount that the pH rose to about 11, and then the solution was heated while stirring at reflux temperature for 1 hour to obtain an aqueous solution of a sodium salt of a graft polymer 12.

EXAMPLE 13

The procedure of EXAMPLE 12 was repeated except that the inside temperature of the reaction vessel was maintained within the range of 140 to 142°C , whereby an aqueous solution of a sodium salt of a graft polymer 13 was obtained.

EXAMPLE 14

Into the same reaction vessel as used in EXAMPLE 1 were placed 70 parts of monomethoxypolyethylene glycol having a number-average molecular weight of 5,000 and 13.9 parts of maleic acid. Under a nitrogen gas current, these materials were melted by heating to make a mixture and inside temperature of the reaction vessel was raised to 140 °C while stirring. Next, while maintaining the inside temperature within the range of 140 to 141°C , 20.4 parts of acrylic acid and 1.68 parts of di-tert-butyl peroxide were separately added dropwise continuously in a 1-hour period and then stirred continuously for 30 minutes. After cooling, a 10 % aqueous sodium hydroxide solution was added, while stirring, in such an amount that the pH rose to about 11, and then the solution was heated while stirring at reflux temperature for 1 hour to obtain an aqueous solution of a sodium salt of a graft polymer 14.

EXAMPLE 15

The procedure of EXAMPLE 12 was repeated except that monomethoxypolyethylene glycol having a number-average molecular weight of 5,000 was used instead of monomethoxypolyethylene glycol having a number-average molecular weight of 2,000 and that the inside temperature of the reaction vessel was maintained within the range of 140 to 142 °C , whereby an aqueous solution of a sodium salt of a graft polymer 15 was obtained.

EXAMPLE 16

Into the same reaction vessel as used in EXAMPLE 1 were placed 70 parts of monomethoxypolyethylene glycol having a number-average molecular weight of 5,000 and 11.8 parts of maleic anhydride. Under a nitrogen gas current, these materials were melted by heating to make a mixture and the inside temperature of the reaction vessel was raised to 150°C while stirring. Next, while maintaining the inside temperature within the range of 150 to 152°C, 20.4 parts of acrylic acid and 2.4 parts of cyclohexane peroxide were separately added dropwise continuously in a 1-hour period and then stirred continuously for 30 minutes. After cooling, a 10 % aqueous sodium hydroxide solution was added, while stirring, in such an amount that the pH rose to about 11, and then the solution was heated while stirring at reflux temperature for 1 hour to obtain an aqueous solution of a sodium salt of a graft polymer 16.

EXAMPLE 17

Into the same reaction vessel as used in EXAMPLE 1 were placed 70 parts of polyethylene glycol having a number-average molecular weight of 3,000 and 13.9 parts of maleic acid. Under a nitrogen gas current, these materials were melted by heating to make a mixture and the inside temperature of the reaction vessel was raised to 140°C while stirring. Next, while maintaining the inside temperature within the range of 140 to 141°C , a solution prepared by dissolving 1.4 parts of benzoyl peroxide in 20.4 parts of acrylic acid was added dropwise continuously in a 1-hour period and then stirred continuously for 30 minutes. After cooling, a 10 % aqueous sodium hydroxide solution was added, while stirring, in such an amount that the pH rose to about 11, and then the solution was heated while stirring at reflux temperature for 1 hour to obtain an aqueous solution of a sodium salt of a graft polymer 17.

EXAMPLE 18

Into the same reaction vessel as used in EXAMPLE 1 were placed 70 parts of an ethylene oxide/propylene oxide random copolymer (90/10 mole ratio) having a number-average molecular weight of 3,000 and 13.9 parts of maleic acid. Under a nitrogen gas current, these materials were melted by heating to make a mixture and the inside temperature of the reaction vessel was raised to 145°C while stirring. Next, while maintaining the inside temperature within the range of 145 to 147°C , 20.4 parts of acrylic acid and 1.6 parts of di-tert-butyl peroxide were separately added dropwise continuously in a 1-hour period and then stirred continuously for 30 minutes. After cooling, a 10 % aqueous sodium hydroxide solution was added, while stirring, in such an amount that the pH rose to about 11, and then the solution was heated while stirring at reflux temperature for 1 hour to obtain an aqueous solution of a sodium salt of a graft polymer 18.

EXAMPLE 19

Into the same reaction vessel as used in EXAMPLE 1 were placed 70 parts of polyethylene glycol having a number-average molecular weight of 10,000 and 1.54 parts of succinic anhydride. Under a nitrogen gas current, the inside temperature of the reaction vessel was raised to 90°C and stirring was carried out for 1 hour. Next, 13.9 parts of maleic acid was added to melt and mix contents of the vessel and the inside temperature was further raised. While maintaining the inside temperature within the range of 140 to 141°C , 20.4 parts of acrylic acid and 1.6 parts of di-tert-butyl peroxide were separately added dropwise continuously in a 1-hour period and then stirred continuously for 30 minutes. After cooling, a 10 % aqueous sodium hydroxide solution was added, while stirring, in such an amount that the pH rose to about 11, and then the solution was heated while stirring at reflux temperature for 1 hour to obtain an aqueous solution of a sodium salt of a graft polymer 19.

EXAMPLE 20

The procedure of EXAMPLE 14 was repeated except that monomethoxypolyethylene glycol having a number-average molecular weight of 2,000 was used instead of monomethoxypolyethylene glycol having a number-average molecular weight of 5,000, that the inside temperature of the reaction vessel was maintained within the range of 145 to 146°C, and that acrylic acid and the initiator was added dropwise continuously in a 2-hour period, whereby an aqueous solution of a sodium salt of a graft polymer 20 was obtained.

COMPARATIVE EXAMPLE 1

Into a glass-made reaction vessel equipped with a thermometer, stirrer, nitrogen gas-introducing tube and reflux condenser were placed 100 parts of polyethylene glycol having a number-average molecular weight of 3,000, 200 parts of water and 0.024 parts of copper (II) sulfate monohydrate. Under a nitrogen gas current, the inside temperature of the reaction vessel was raised to reflux temperature. Next, 125 parts of acrylic acid, 40.3 parts of a 31 % aqueous hydrogen peroxide solution and 108.33 parts of a 48 % aqueous sodium hydroxide solution were separately added dropwise continuously in a 2-hour period and then stirred continuously at reflux temperature for 20 minutes. After cooling, 23.44 parts of a 48 % aqueous sodium hydroxide solution was added to obtain an aqueous solution of a sodium salt of a comparative polymer 1.

COMPARATIVE EXAMPLE 2

Into a glass-made reaction vessel equipped with a thermometer, stirrer, nitrogen gas-introducing tube and reflux condenser were placed 25 parts of polyethylene glycol having a number-average molecular weight of 3,000 and 50 parts of water. Under a nitrogen gas current, the inside temperature of the reaction vessel was raised to 90°C. Next, a solution prepared by dissolving 1 part of benzoyl peroxide in 25 parts of acrylic acid was added dropwise continuously in a 30-minute period and then stirred continuously at 90°C for 2 hours. After cooling, a 10 % aqueous sodium hydroxide solution was added in such an amount that acrylic acid, added dropwise, was completely neutralized to obtain an aqueous solution of a sodium salt of a comparative polymer 2.

COMPARATIVE EXAMPLE 3

Into a glass-made reaction vessel equipped with a thermometer, stirrer, nitrogen gas-introducing tube and reflux condenser was placed 40 parts of monomethoxypolyethylene glycol having a number-average molecular weight of 2,000. Under a nitrogen gas current, the inside temperature of the reaction vessel was raised to 90°C . Next, a solution prepared by dissolving 0.5 parts of benzoyl peroxide in 10 parts of acrylic acid was added dropwise continuously in a 30-minute period and then stirred continuously at 90 °C for 2 hours. After cooling, a 10 % aqueous sodium hydroxide solution was added in such an amount that acrylic acid, added dropwise, was completely neutralized to obtain an aqueous solution of a sodium salt of a comparative polymer 3.

COMPARATIVE EXAMPLE 4

Into a glass-made reaction vessel equipped with a thermometer, stirrer, nitrogen gas-introducing tube and reflux condenser was placed 180 parts of polyethylene glycol having a number-average molecular weight of 3,000. Under a nitrogen gas current, this polyethylene glycol was melted by heating and the inside temperature of the reaction vessel was raised to 150°C while stirring. Next, 20 parts of acrylic acid and 1 part of di-tert-butyl peroxide were separately added dropwise continuously in a 1-hour and 30-minute period and then stirred continuously for 1 hour. After cooling, a 10 % aqueous sodium hydroxide solution was added in such an amount that acrylic acid, added dropwise, was completely neutralized, and then the solution was heated while stirring at reflux temperature for 1 hour to obtain an aqueous solution of a sodium salt of a comparative polymer 4.

COMPARATIVE EXAMPLE 5

Into a glass-made reaction vessel equipped with a thermometer, stirrer, nitrogen gas-introducing tube and reflux condenser was placed 54 parts of an ethylene oxide/propylene oxide random copolymer (60/40 mole ratio; hereinafter referred to as polyether) having a number-average molecular weight of 3,000. Under a nitrogen gas current, the inside temperature of the reaction vessel was raised to 150°C while stirring. Next, a mixed solution of 11 parts of the above-mentioned polyether with 20 parts of acrylic acid and another mixed solution of 15 parts of the above-mentioned polyether with 1 part of di-tert-butyl peroxide were separately added dropwise continuously in a 1-hour and 30-minute period and then stirred continuously for 1 hour. After cooling, a 10 % aqueous sodium hydroxide solution was added in such an amount that acrylic acid, added dropwise, was completely neutralized, and then the solution was heated while stirring at reflux temperature for 1 hour to obtain an aqueous solution of a sodium salt of a comparative polymer 5.

The graft ratios of the polymers obtained in Examples and Comparative Examples (the amount of homopolymers which were not grafted on polyethers) were determined by examining solubility of acid type polymers in benzene (usually, polycarboxylic acids such as polyacrylic acids and acrylic acid/maleic acid copolymers do not dissolve in solvents such as benzene, toluene and chloroform).

First, polymers were prepared as follows.

With respect to Examples 1 to 20 and Comparative Examples 3 to 5, there were intactly used graft polymers 1' to 20' and comparative polymers 3' to 5' which had not yet been neutralized using the aqueous sodium hydroxide solution after polymerization.

With respect to the polymer obtained in Comparative Example 1, its aqueous sodium salt solution was treated with strongly acidic cation-exchange resin to convert sodium carboxylate groups into carboxyl groups and then drying was carried out to remove water content, whereby the comparative polymer 1' was obtained.

With respect to the polymer obtained in Comparative Example 2, its aqueous solution, which had not yet been neutralized using the aqueous sodium hydroxide solution after polymerization, was dried to remove water content, whereby the comparative polymer 2' was obtained.

Next, to 10 parts of each of the above-prepared polymers was 90 parts of added benzene, the resulting mixture was heated to reflux temperature while stirring, and the stirring was continued for 1 hours. After cooling, the condition of the benzene solution was observed.

With respect to the polymers 1' to 20' of Examples 1 to 20 and the comparative polymer 4' of Comparative Example 4, transparent liquids without turbidity were formed. On the other hand, with respect to the comparative polymers 1' to 3' and 5' of Comparative Examples 1 to 3 and 5, precipitates were formed. This shows that with respect to the comparative polymers of Comparative Examples 1 to 3 and 5, there were formed a large amount of polymers of only monomer components (B) which were not grafted on polyether compounds (A).

Each of the graft polymers obtained in Examples 1 to 20 and each of the comparative polymers obtained in Comparative Examples 1 to 4 was separated into:

1) a graft polymer formed by graft polymerization of the monomer component (B) upon the polyether compound (A); and

2) a polymer of only the monomer component (B) which was not grafted on the polyether compound (A), using a capillary electrophoresis system in accordance with the difference in electric charge density between the polymers.

Next, detection using a 184 nm ultraviolet ray detector was carried out and the data obtained was analyzed to determine a ratio of the polymer of only the ungrafted monomer component (B) to the initial amount of the monomer component (B) charged into the reaction vessel. Results are shown in Table 1.

TABLE 1

| Polymer | Ratio of polymer of ungrafted monomer component (B) only (%) | Polymer | Ratio of polymer of ungrafted monomer component (B) only (%) |
|---|---|---|---|
| Graft polymer 1 | 10 | Graft polymer 13 | 11 |
| Graft polymer 2 | 22 | Graft polymer 14 | 16 |
| Graft polymer 3 | 20 | Graft polymer 15 | 13 |
| Graft polymer 4 | 8 | Graft polymer 16 | 10 |
| Graft polymer 5 | 14 | Graft polymer 17 | 17 |
| Graft polymer 6 | 15 | Graft polymer 18 | 22 |
| Graft polymer 7 | 14 | Graft polymer 19 | 18 |
| Graft polymer 8 | 5 | Graft polymer 20 | 12 |
| Graft polymer 9 | 10 | Comparative polymer 1 | 95 |
| Graft polymer 10 | 8 | Comparative polymer 2 | 91 |
| Graft polymer 11 | 10 | Comparative polymer 3 | 88 |
| Graft polymer 12 | 7 | Comparative polymer 4 | 75 |

Evaluation as dispersing agents of water-soluble graft polymers obtained by the production process of the present invention:

The graft polymer 1 of Example 1 and the comparative polymers 1 and 4 of Comparative Examples 1 and 4 were evaluated as dispersing agents as follows.

A slurry was prepared so that a ratio by weight of light calcium carbonate (trade name: Brilliant #1500, made by Shiraishi Kogyo Kaisha, Ltd.) to water might be 60/40. To this slurry was added each of the graft polymer and comparative polymers while stirring to adjust the viscosity of the slurry. The resulting viscosity of the slurry was measured using a B type rotation viscometer to show the viscosity in the unit "cps". However, in the case where no graft polymer was added, the slurry had almost no fluidity and therefore the viscosity measurement was impossible. Results were shown in Table 2. When compared with the comparative polymers of Comparative Examples, the graft polymer of Example 1 displayed good performance as a dispersing agent and also lowered the viscosity of the calcium carbonate slurry even by adding a small amount of the graft polymer.

TABLE 2

| Dispersing agent | Amount added (wt. % based on calcium carbonate) | | | |
|---|---|---|---|---|
| | 0.20 | 0.25 | 0.30 | 0.35 |
| Graft polymer 1 | 3370 cps | 2030 cps | 1460 cps | 1160 cps |
| Comparative polymer 1 | Measurement was impossible. | Measurement was impossible. | 4120 cps | 2860 cps |
| Comparative polymer 4 | Measurement was impossible. | Measurement was impossible. | Measurement was impossible. | 3800 cps |

Evaluation as water-treating agents of water-soluble graft polymers obtained by the production process of the present invention:

The scale-inhibitability of the graft polymers 5, 13 and 20 of Examples 5, 13 and 20 and the comparative polymer 5 of Comparative Example 5 as water treatment agents were evaluated as follows.

Into a 225 ml glass bottle containing 170 g of water were added, while mixing, 10 g of a 1.56 % aqueous solution of dihydrate of calcium dichloride and 3 g of a 0.02 % aqueous solution of each polymer. To the resulting mixture were further added 10 g of a 3 % aqueous sodium hydrogen carbonate solution and 7 g of water so that the amount of the entire contents of the bottle might be 200 g. The resulting 530 ppm aqueous persaturated calcium carbonate solution was sealed and then heated at 70 °C for 3 hours. After cooling, precipitates formed was filtrated using a membrane filter having a pore size of 0.1 μm, and a filtrate obtained was analyzed according to JIS K0101 to determine a calcium carbonate-inhibiting ratio (%) from the following formula:

$$\text{Scale - inhibiting ratio (\%)} = (C - B)/(A - B) \times 100$$

where:

A is a concentration of calcium which was dissolved in a solution before the test;

B is a calcium concentration in a filtrate tested by adding no scale-inhibitor; and

C is a calcium concentration in a filtrate after the test.

Results were shown in Table 3.

When compared with the comparative polymer of Comparative Example; the graft polymers of Examples displayed good performance as water-treating agents.

TABLE 3

| Water-treating agent | Scale-inhibiting ratio (%) |
|---|---|
| Graft polymer 5 | 55 |
| Graft polymer 13 | 52 |
| Graft polymer 20 | 60 |
| Comparative polymer 5 | 5 |

Evaluation of calcium ion-chelating ability:

There were used, as builders, sodium salts of the graft polymers 1, 2, 4, 5, 8 and 13 to 20 of Examples 1, 2, 4, 5, 8 and 13 to 20 and those of the comparative polymer 4 of Comparative Example 4 to evaluate an ability of these polymers to chelate calcium ions as follows.

Into a 50 ml beaker was placed 100 mg of a 10 % aqueous solution of the sodium salt of each polymer, and to this solution was added, while stirring, 50 ml of an aqueous solution containing $1.0 \times 10^{-3}$ M of calcium dichloride and 0.08 M of potassium chloride. The calcium ion concentration of the resulting mixed solution was measured using a calcium ion electrode (MODELE 93-20 made by Orion Research Incorporated) and an ion analyzer (EA920 made by Orion Research Incorporated) to show in Table 4 the amount of calcium ions, chelated by 1 g of each polymer, in milligrams calculated as calcium carbonate. When compared with the comparative polymer of Comparative Example, the graft polymers of Examples displayed good calcium ion-chelating ability because they contained a large amount of carboxylic acids.

TABLE 4

| Builder | Ca$^{2+}$-chelating ability (mgCaC0$_3$/g) |
|---|---:|
| Graft polymer 1 | 120 |
| Graft polymer 2 | 111 |
| Graft polymer 4 | 88 |
| Graft polymer 5 | 112 |
| Graft polymer 8 | 105 |
| Graft polymer 13 | 105 |
| Graft polymer 14 | 109 |
| Graft polymer 15 | 91 |
| Graft polymer 16 | 94 |
| Graft polymer 17 | 108 |
| Graft polymer 18 | 106 |
| Graft polymer 19 | 103 |
| Graft polymer 20 | 107 |
| Comparative polymer 4 | 28 |

Evaluation of clay-dispersing ability:

There were used sodium salts of the graft polymers 5, 11, 13, 14 and 18 to 20 of Examples 5, 11, 13, 14 and 18 to 20 and those of the comparative polymers 1 and 4 of Comparative Examples 1 and 4 to evaluate an ability of these polymers to disperse clay as follows.

Into a 100 ml colorimetric tube was placed 3 g of a 0.1 % aqueous solution of the sodium salt of each polymer, and to this solution was added a buffer solution of pH 9 so that the amount of the entire contents of the tube might be 60 ml. To the tube was further added 0.3 g of test dust of class 11 (made by Nippon Funtai Kogyo Gijutsu Kyokai) and then this tube was sealed and shaken up and down 50 times. The tube was allowed to stand for 11 hours and then 10 ml of a liquid in the tube was aspirated up from a part of 15 ml below a liquid face using a whole pipet. The aspirated liquid was subjected to measurement of transmittance of 600 nm ultraviolet rays using a SPECTRONIC20A made by Shimadzu Corporation. Results were shown in Table 5. When compared with the comparative polymers of Comparative Examples, the graft polymers of Examples displayed excellent clay-dispersing ability because they have a high density of carboxylic acids and also have a high graft ratio.

TABLE 5

| Builder | Transmittance (%) |
|---|---|
| Graft polymer 5 | 8 |
| Graft polymer 11 | 16 |
| Graft polymer 13 | 10 |
| Graft polymer 14 | 23 |
| Graft polymer 18 | 6 |
| Graft polymer 19 | 25 |
| Graft polymer 20 | 2 |
| Comparative polymer 1 | 52 |
| Comparative polymer 4 | 61 |
| No addition | 70 |

EXAMPLES 21 TO 34 AND COMPARATIVE EXAMPLE 6

Sodium salts of the graft polymers 1, 3, 5 to 14, 19 and 20 of Examples 1, 3, 5 to 14, 19 and 20 as well as a sodium salt of the comparative polymer 4 of Comparative Example 4 were used as sample builders to prepare detergent compositions with the following formulation: 20 wt. % of sodium alkylbenzenesulfonate, 20 wt. % of the sample builder, 10 wt. % of #2 sodium silicate, 10 wt. % of anhydrous sodium carbonate and 40 wt. % of anhydrous sodium sulfate.

Evaluation of washing-power:

Washing-power of each of the above-prepared detergent compositions was examined as follows. Water having a hardness of 4° DH ($Ca^{2+}/Mg^{2+}$ = 3/1 (mole ratio)) was used to prepare a washing-liquid containing the detergent composition in a concentration of 0.1 wt. %. Four artificially polluted cloths of 10 cm× 10 cm were washed in 500 ml of the washing-liquid at 25°C , 100 rpm for 5 minutes using a Terg-O-Tometer made by Koa Shokai Co., Ltd. The washed cloths were rinsed for 5 minutes and then dried. The degree of dirt removal from the cloths were examined by measuring their surface reflectivity using a surface reflectometer and by calculating a washing ratio according to the formula:

$$\text{Washing ratio (\%)} = (R_W - R_S)(R_O - R_S) \times 100$$

where:

$R_O$ is surface reflectivity of an original white cloth of the artificially polluted cloth;

$R_S$ is surface reflectivity of the artificially polluted cloth before washing; and

$R_W$ is surface reflectivity of the artificially polluted cloth after washing.

The detergent composition containing no builder was prepared by combining water instead of the sample builder as combined above. Results were shown in Table 6. When compared with the polymer of Comparative Example, the graft polymers of Examples displayed good buildability.

TABLE 6

| | Builder | Washing ratio (%) |
|---|---|---|
| Example 21 | Graft polymer 1 | 60.5 |
| Example 22 | Graft polymer 3 | 61.8 |
| Example 23 | Graft polymer 5 | 64.2 |
| Example 24 | Graft polymer 6 | 62.6 |
| Example 25 | Graft polymer 7 | 63.9 |
| Example 26 | Graft polymer 8 | 60.1 |
| Example 27 | Graft polymer 9 | 60.3 |
| Example 28 | Graft polymer 10 | 59.2 |
| Example 29 | Graft polymer 11 | 61.3 |
| Example 30 | Graft polymer 12 | 61.1 |
| Example 31 | Graft polymer 13 | 64.6 |
| Example 32 | Graft polymer 14 | 62.5 |
| Example 33 | Graft polymer 19 | 61.9 |
| Example 34 | Graft polymer 20 | 64.9 |
| | No addition of builder | 51.7 |
| Comparative Example 6 | Comparative polymer 4 | 54.9 |

EXAMPLES 35 TO 42 AND COMPARATIVE EXAMPLES 7 TO 14

Sodium salts of the graft polymers 1, 5, 8, 11 and 20 of Examples 1, 5, 8, 11 and 20 as well as sodium salts of the comparative polymers 1 to 3 of Comparative Examples 1 to 3 were used as sample builders to prepare liquid detergent compositions with the formulation as shown in Tables 7 to 9.

Addition into liquid detergent:

Compatibility of each of the liquid detergent compositions was evaluated at 25°C and 0°C and marked accordingly with:
the symbol "○ " in the case where the composition was homogeneous, non-turbid and transparent and
the symbol "× " in the case where the composition was separated, turbid or opaque.
In addition, with respect to the liquid detergent compositions of Examples 35 and 36 and that of Comparative Example 9, their washing-power was examined in the same way as aforementioned, except that washing-liquids were prepared so that the concentrations of the liquid detergent compositions might be 0.025 wt. % and 0.05 wt. %. Results were shown in Tables 7 to 9.
When compared with the comparative polymers of Comparative Examples, since the graft polymers of the Examples had high graft ratios on polyether, these graft polymers displayed excellent compatibility with surfactants and formed the homogeneous, non-turbid and transparent liquid detergents. In addition, addition of the graft polymers enhanced washing-power of the liquid detergents.

TABLE 7

| Formulation | | Example | | Comparative Example | | |
|---|---|---|---|---|---|---|
| | | 35 | 36 | 7 | 8 | — |
| Graft polymer 5 | | 20 | — | — | — | — |
| Graft polymer 8 | | — | 20 | — | — | — |
| Comparative Polymer 1 | | — | — | 10 | — | — |
| PSA[1] | | — | — | — | 2 | — |
| Softanol 90[2] | | 30 | 30 | 30 | 30 | 30 |
| SDS[3] | | 10 | 10 | 10 | 10 | 10 |
| Ethanol | | 10 | 10 | 10 | 10 | 10 |
| Water | | 30 | 30 | 40 | 48 | 50 |
| Compatibility at 25°C | | ○ | ○ | × | × | ○ |
| Compatibility at 0°C | | ○ | ○ | × | × | ○ |
| Washing ratio (%) | Concentration of detergent composition: 0.025 % | 51.3 | 50.6 | — | — | 48.3 |
| | Concentration of detergent composition: 0.050 % | 53.2 | 55.2 | — | — | 49.7 |

Footnote: 1) Sodium polyacrylate (Mw 4,500)
2) Polyoxyethylene secondary-higher-alcohol ether (cloud point 56 °C, HLB 13.3) made by Nippon Shokubai Co., Ltd.
3) Sodium dodecylsulfate

T A B L E  8

| Formulation | Example | | | Comparative Example | | | |
|---|---|---|---|---|---|---|---|
| | 37 | 38 | 39 | 9 | 10 | 11 | — |
| Graft polymer 1 | 17 | — | — | — | — | — | — |
| Graft polymer 11 | — | 17 | — | — | — | — | — |
| Graft polymer 20 | — | — | 17 | — | — | — | — |
| Comparative Polymer 1 | — | — | — | 7 | — | — | — |
| Comparative Polymer 2 | — | — | — | — | 7 | — | — |
| Comparative Polymer 3 | — | — | — | — | — | 17 | — |
| PSA[1] | — | — | — | — | — | — | 5 |
| POE · R[2] | 22 | 22 | 22 | 22 | 22 | 22 | 22 |
| AES[3] | 22 | 22 | 22 | 22 | 22 | 22 | 22 |
| Ethanol | 4 | 4 | 4 | 4 | 4 | 4 | 4 |
| Water | 35 | 35 | 35 | 45 | 45 | 35 | 47 |
| Compatibility at 25°C | ◯ | ◯ | ◯ | × | × | × | × |
| Compatibility at 0°C | ◯ | ◯ | ◯ | × | × | × | × |

Footnote: 1) Sodium polyacrylate (Mw 4,500)
2) Polyoxyethylene higher-alcohol ether
(cloud point 56 °C, HLB 13.3)
3) Polyoxyethylene sodium laurylsulfate

T A B L E   9

| Formulation | Example | | | Comparative Example | | | |
|---|---|---|---|---|---|---|---|
| | 40 | 41 | 42 | 12 | 13 | 14 | — |
| Graft polymer 1 | 13 | — | — | — | — | — | — |
| Graft polymer 11 | — | 13 | — | — | — | — | — |
| Graft polymer 20 | — | — | 13 | — | — | — | — |
| Comparative Polymer 1 | — | — | — | 5 | — | — | — |
| Comparative Polymer 2 | — | — | — | — | 5 | — | — |
| Comparative Polymer 3 | — | — | — | — | — | 13 | — |
| PSA[1] | — | — | — | — | — | — | 4 |
| AES[2] | 13 | 13 | 13 | 13 | 13 | 13 | 13 |
| DBS[3] | 13 | 13 | 13 | 13 | 13 | 13 | 13 |
| Ethanol | — | — | — | — | — | — | — |
| Water | 61 | 61 | 61 | 69 | 69 | 61 | 70 |
| Compatibility at 25°C | ○ | ○ | ○ | × | × | × | × |
| Compatibility at 0°C | ○ | ○ | ○ | × | × | × | × |

Footnote: 1) Sodium polyacrylate (Mw 4,500)
2) Polyoxyethylene sodium laurylsulfate
3) Sodium dodecylbenzenesulfonate

EXAMPLE 43

Into the same reaction vessel as used in EXAMPLE 1 was placed 70 parts of polyethylene glycol having a number-average molecular weight of 7,500. Under a nitrogen gas current, this polyethylene glycol was melted by heating and the inside temperature of the reaction vessel was raised to 150 °C while stirring. Next, while maintaining the inside temperature within the range of 150 to 152°C , 26.5 parts of acrylic acid and 0.6 parts of di-tert-butyl peroxide were separately added dropwise continuously in a 1-hour period and then stirred continuously for 1 hour to obtain a graft polymer. To 13.7 parts of this polymer were added 4.8 parts of a 48 % aqueous sodium hydroxide solution and 12 parts of water. The resulting mixture was heated to reflux temperature while stirring to form a homogeneous solution. To this solution was added 0.8 parts of polyethylene glycol diglycidyl ether (trade name: Denacol EX-830, made by Nagase Chemicals Co., Ltd.), and the resulting mixture was heated at 90°C for 4 hours to obtain a gel. Next, this gel was dried under reduced pressure at 90°C for 12 hours and then pulverized to obtain a water-absorbent resin.

Evaluation of water-absorbent resin formed by crosslinking water-soluble graft polymer obtained by process of present invention:

Absorption capacity of the above-obtained water-absorbent resin was measured. As a result, the capacity was 104 times for pure water, 34 times for physiological saline and 20 times for seawater. This result shows salt-resistance is high.

Various details of the invention may be changed without departing from its spirit not its scope. Furthermore, the foregoing description of the preferred embodiments according to the present invention is provided for the purpose of illustration only, and not for the purpose of limiting the invention as defined by the appended claims and their equivalents.

## Claims

1. A process for producing a water-soluble graft polymer, which comprises the steps of:
   preparing:
   (A) a polyether compound including 80 mol % or more of ethylene oxide as a constituent unit and having a number-average molecular weight of 200 or more; and
   (B) a monomer component including:
   (b1) 40 to 100 mol % of (meth)acrylic acid; and
   (b2) 0 to 60 mol % of another copolymerizable monoethylenically unsaturated monomer;
   and then carrying out graft polymerization of said monomer component (B) upon said polyether compound (A) by mixing said monomer component (B) with said polyether compound (A) at 100 °C or higher in the present of a polymerization initiator using substantially no solvent, wherein the amount used of said monomer component (B) is at least 25 wt. % per 100 wt. % of said polyether compound (A).

2. A process as claimed in Claim 1, wherein the amount used of said monomer component (B) is 25 to 200 wt. % per 100 wt. % of said polyether compound (A).

3. A process as claimed in either one of Claims 1 and 2, wherein the amount used of said monomer component (B) is 25 to 100 wt. % per 100 wt. % of said polyether compound (A).

4. A process as claimed in any one of Claims 1 to 3, wherein the amount used of acrylic acid of said (meth)acrylic acid component (b1) is at least 20 wt. % per 100 wt. % of said polyether compound (A).

5. A process as claimed in any one of Claims 1 to 4 wherein said monomer component (b2) is at least one monomer selected from the group consisting of maleic acid, fumaric acid and maleic anhydride; and wherein said graft polymerization step incudes the steps of:
   mixing beforehand half or more of the amount used of said monomer component (b2) with said polyether compound (A); and
   mixing said (meth)acrylic acid (b1), said polymerization initiator and the balance of said monomer component (b2) with said polyether compound (A).

6. A process as claimed in any one of claims 1 to 5, wherein the temperature in said graft polymerization step is within the range of 110 to 160 °C.

7. A process as claimed in any one of Claims 1 to 6, wherein the amount used of said polymerization initiator is within the range of 0.1 to 15 wt. % per 100 wt. % of said monomer component (B).

8. A process as claimed in any one of Claims 1 to 7, wherein said polymerization initiator is an organic peroxide.

9. A process as claimed in any one of Claims 1 to 8 wherein said polyether compound (A) has a hydroxyl group at both terminals.

10. A process as claimed in any one of Claims 1 to 8, wherein a hydroxyl group of one or both of the terminals of said polyether compound (A) is esterified with a saturated dicarboxylic acid having 6 or less carbon atoms or anhydride thereof.

11. A process as claimed in any one of Claims 1 to 10 wherein said polyether compound (A) has a number-average molecular weight of 200 to 20,000.

12. A process as claimed in any one of Claims 1 to 11 wherein said polyether compound (A) has a number-average molecular weight of 500 to 20,000.

13. A process as claimed in any one of Claims 1 to 12 wherein said polyether compound (A) is polyethylene glycol.

14. A water-soluble graft polymer obtainable by a process comprising the steps of:
preparing:
(A) a polyether compound including 80 mol % or more of ethylene oxide as a constituent unit and having a number-average molecular weight of 200 or more; and
(B) a monomer component including:
(b1) 40 to 100 mol % of (meth)acrylic acid; and
(b2) 0 to 60 mol % of another copolymerizable monoethylenically unsaturated monomer;
and then carrying out graft polymerization of said monomer component (B) upon said polyether compound (A);
wherein the content of polymers of only monomer components (B) ungrafted upon said polyether compound (A) in said water-soluble graft polymer is smaller than 30 wt. % per 100 wt. % of all the monomer components (B) used.

15. A water-soluble graft polymer as claimed in Claim 14, wherein the content of said polymers of only monomer components (B) ungrafted upon said polyether compound (A) is smaller than 25 wt. % per 100 wt. % of all the monomer components (B) used.

16. A water-soluble graft polymer as claimed in either of Claims 14 and 15 wherein said polymer component (b2) is at least one monomer selected from the group consisting of maleic acid, fumaric acid and maleic anhydride.

17. A water-soluble graft polymer as claimed in any one of Claims 14 to 16 wherein said polyether compound (A) has a number-average molecular weight of 200 to 20,000.

18. A builder comprising a water-soluble graft polymer as claimed in any one of Claims 14 to 17; and/or any salt thereof.

19. A detergent composition comprising a builder as claimed in Claim 18 and a surfactant.

20. A water-absorbent resin in which a water-soluble graft polymer as claimed in any one of Claims 14 to 17 is crosslinked by a crosslinking agent.

European Patent
Office

**EUROPEAN SEARCH REPORT**

Application Number

EP 94 30 5849

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | US-A-4 874 540 (R.B. GREENWALD ET AL)<br><br>* claims 1,11,19,21 *<br>* examples *<br>--- | 1-4,7,8,<br>11,12,<br>14,18,19 | C08F283/06<br>C11D3/37 |
| X | WO-A-91 19778 (BASF AG)<br><br>* claims *<br>* examples *<br>* page 4, line 43 - page 5, line 1 *<br>* page 5, line 12 - line 34 *<br>* page 3, line 12 - line 25 *<br>--- | 1-8,<br>11-19 | |
| D,Y | EP-A-0 429 307 (ROHM AND HAAS COMPANY)<br><br>* claims *<br>* examples *<br>* page 4, line 14 - line 17 *<br>--- | 1-4,<br>6-15,<br>17-20 | |
| D,Y | EP-A-0 011 833 (UNION CARBIDE CORPORATION)<br><br>* claims *<br>* examples *<br>* page 5, line 16 - line 17 *<br>----- | 1-4,<br>6-15,<br>17-20 | TECHNICAL FIELDS SEARCHED (Int.Cl.6)<br><br>C08F<br>C11D |

The present search report has been drawn up for all claims

| Place of search | Date of completion of the search | Examiner |
|---|---|---|
| THE HAGUE | 26 October 1994 | Persson, E |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)